# EUROPEAN PATENT APPLICATION

(11) **EP 1 633 148 A1**
(43) Date of publication of application: **08.03.2006**
(21) Application number: 04735404.8
(22) Date of filing: 28.05.2004
(51) Int. Cl.: H04N 13/04

(54) **IMAGE RECEIVING APPARATUS AND IMAGE REPRODUCING APPARATUS**

(30) Priority: 30.05.2003 JP 2003154875
(71) Applicant: SHARP KABUSHIKI KAISHA, Osaka 545-8522 (JP)
(72) Inventor: ITO, Motohiro, 2610011 (JP); OHARA, Kazuto, 2740063 (JP)
(74) Representative: Suckling, Andrew Michael
(86) International application number: PCT/JP2004/007800
(87) International publication number: WO 2004/107766

(57) **Abstract**

The present invention relates to a video receiving apparatus receiving, from a communication channel, video data of three-dimensional video taken using binocular parallax and added information for the video data, or to a video reproducing apparatus reading such from a recording medium. The video receiving apparatus or video reproducing apparatus detects added information indicating a predetermined format for three-dimensionally displaying the video data, and three-dimensionally displays video data that conforms to the predetermined format. The video receiving apparatus uses a data reception unit (151) to receive multiplexed data including video data and added information and uses a data separation unit (152) to extract the video data and its added information. A control unit (153) controls a video conversion unit (155) based on the added information to convert the video data to three-dimensional video that conforms to the predetermined format and display it on a display unit (156).

## Description

### Technical Field

The present invention relates to a video receiving apparatus to receive and three-dimensionally display video data which has been provided by taking a three-dimensional video using binocular parallax and transmitted via a communication channel, and a video reproducing apparatus to read and three-dimensionally display video data which has been provided by taking a 3D video using binocular parallax and recorded in a recording medium.

### Background Art

Conventionally, stereo video in which a plurality of videos with a parallax for a subject can be separately viewed by the right and left eyes to view the imaged subject three-dimensionally can be taken by a common monocular camera with a stereo adaptor mounted on it for forming a plurality of subject images with different visual points to take a plurality of videos with a parallax on one screen.

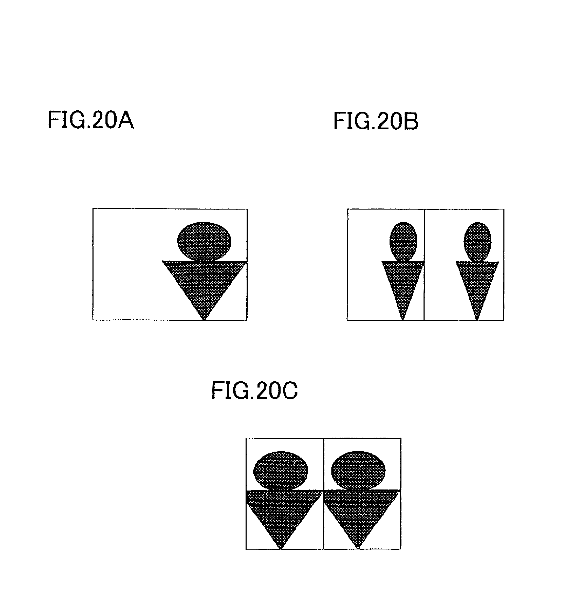

Figs. 20A to 20C are views for explaining videos taken with a stereo adaptor mounted.

Fig. 20A shows a video taken without a stereo adaptor, Fig. 20B shows a video taken with a stereo adaptor of the type providing a half angle of view, and Fig. 20C shows a video taken with a stereo adaptor of the type providing a smaller range for picture-taking while the angle of view remains the same. Usually, when a stereo adaptor is mounted, a left eye video is generated on the left half of the screen and a right eye video on the right half.

The videos thus taken can be viewed stereoscopically by viewing the left eye video only with the left eye and the right eye video only with the right eye.

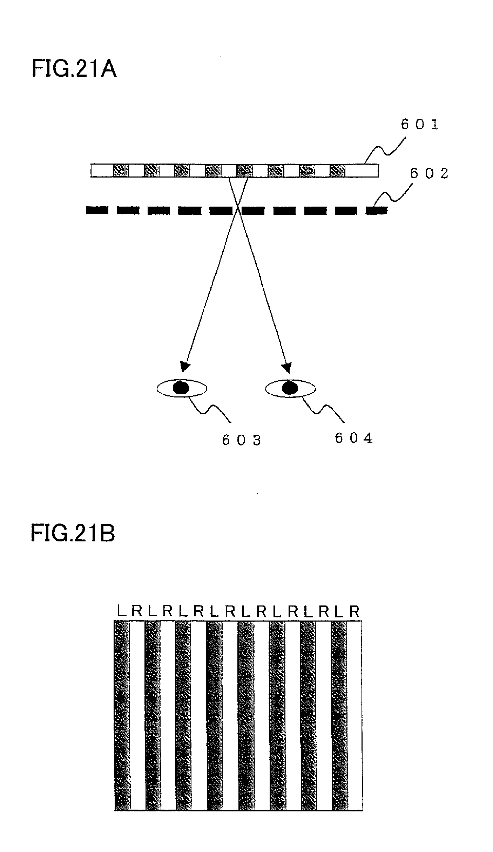

Figs. 21A and 21B illustrate the parallax barrier method, which is one of the representative methods for achieving stereovision using binocular parallax.

Fig. 21A shows how parallax occurs. Fig. 21B shows a display format of a screen from parallax barrier displaying, where left eye videos and right eye videos alternate by one pixel in the horizontal direction.

In Fig. 21A, videos as shown in Fig. 21B are displayed on a video display panel 601, and a parallax barrier 602 having slits with a distance smaller than that between pixels for the same visual point is placed in front of video display panel 601, such that a left eye video is only viewed by left eye 603 and a right eye video is only viewed by right eye 604, thereby achieving stereovision.

For suitable reproduction for three-dimensional videos from such stereo picture-taking, a two-dimensional video from monocular picture-taking needs to be differentiated from a three-dimensional video from stereo picture-taking. To enable a three-dimensional video from stereo picture-taking to be differentiated from a two-dimensional video from monocular picture-taking, Japanese Patent Laying-Open No. 2001-222083 discloses a method for allowing identifying a three-dimensional video and a two-dimensional video by adding recording names serving as identifiers such as "stereol", "stereo2", ... to the former and "normal1", "normal2", ... to the latter.

However, the above conventional technique only adds recording names for identifiers and it is not possible to know in which conditions the recorded video has been taken. While it would be acceptable on a reproducing device for only reproducing videos taken by certain picture-taking devices, the same reproducing device may not be capable of reproducing a video taken by other picture-taking devices.

For example, videos from stereo picture-taking as shown in Fig. 20B can be converted to the display format of Fig. 21B by arranging alternatingly the left eye videos and the right eye videos by one pixel in the horizontal direction. However, to convert videos as shown in Fig. 20C to the display format of Fig. 21B, the left eye video and the right eye video need to be reduced to a half in the horizontal direction before being alternatingly arranged by one pixel in the horizontal direction.

To reproduce a three-dimensional video from such stereo picture-taking, it needs to be converted to a format suitable for the display device. However, since reproduced videos of different data formats require different processing methods, one reproducing device may not correctly convert a video to be reproduced to its display format when the video's data format is not known. Videos taken by the same picture-taking device may not be correctly converted if the display mode of the reproducing device is different, requiring a different processing method.

That is, while there won't be a problem if one picture-taking device corresponds to one reproducing device, the usability of a video taken will be significantly compromised when videos are exchanged between different devices which will require the picture-taking condition to match with the reproducing condition.

Moreover, identifiers are recorded not only in stereo picture-taking but also in monocular picture-taking, but certain modes of recording may make reproduction impossible in other devices.

### Disclosure of the Invention

In view of the above problems, an object of the present invention is to provide a video reproducing apparatus and a video receiving apparatus that facilitate viewing/listening in connection with video data including added information for increasing usability of a video data from stereo picture-taking while maintaining compatibility with existing devices.

To achieve the above object, an aspect of the present invention provides a video receiving apparatus including a reception unit receiving, from a communication channel, video data in a predetermined format and attached information for the video data, the apparatus including a detection unit detecting, in the attached information, added information for three-dimensionally displaying the video data, where a signal for three-dimensionally displaying the video data is generated when the added information is detected by the detection unit.

Another aspect of the present invention provides a video reproducing apparatus including a reading unit reading video data and attached information for the video data recorded in a recording medium, the apparatus including a detection unit detecting, in the attached information, added information for three-dimensionally displaying the video data, where a signal for three-dimensionally displaying the video data is generated when the added information is detected by the detection unit.

Preferably, the present invention creates classification information by which the video data is classified into a three-dimensional video with the added information and remaining two-dimensional video depending on whether or not the added information is present.

Preferably, the present invention reproduces video data selected based on the classification information.

Preferably, the present invention includes a recording unit recording, in the recording medium, video data selected based on the classification information.

Preferably, the present invention includes a recording unit recording the classification information in a recording medium.

### Brief Description of the Drawings

Fig. 1 shows an exemplary configuration of a video recording apparatus according to a first embodiment of the present invention.
Fig. 2 shows an example of added information in the present invention.
Fig. 3 shows an exemplary track configuration on a magnetic tape.
Fig. 4 shows a track format on the magnetic tape.
Fig. 5 shows a format for video recording areas of the track format on the magnetic tape.
Fig. 6 shows an exemplary recording format of video data into a file in the present invention.
Fig. 7 shows an exemplary configuration of a video reproduction system according to a second embodiment of the present invention.
Fig. 8 shows an exemplary configuration of a video transmitting apparatus according to the second embodiment of the present invention.
Fig. 9 shows an exemplary configuration of a packet.
Fig. 10 shows an order of transmission for data blocks in the DV format.
Fig. 11 shows an exemplary configuration of a video receiving apparatus according to the second embodiment of the present invention.
Fig. 12 shows an example of added information in the present invention.
Figs. 13A and 13B illustrate three-dimensional displaying.
Fig. 14 illustrates how stand-out extent can be regulated.
Figs. 15A and 15B illustrate a change in image format when stand-out extent is regulated.
Figs. 16A to 16C illustrate display methods when stand-out extent is regulated.
Figs. 17A and 17B illustrate regulation of vertical position.
Fig. 18 shows exemplary elements of 3D information required for high-speed searching in the present invention.
Fig. 19 shows an example of classification information in the present invention.
Figs. 20A to 20C are views for explaining images taken with a stereo adaptor mounted on the camera.
Figs. 21A and 21B illustrate how the parallax barrier method works.

### Best Modes for Carrying Out the Invention

Embodiments of the present invention will now be described referring to the drawings.

### [First Embodiment]

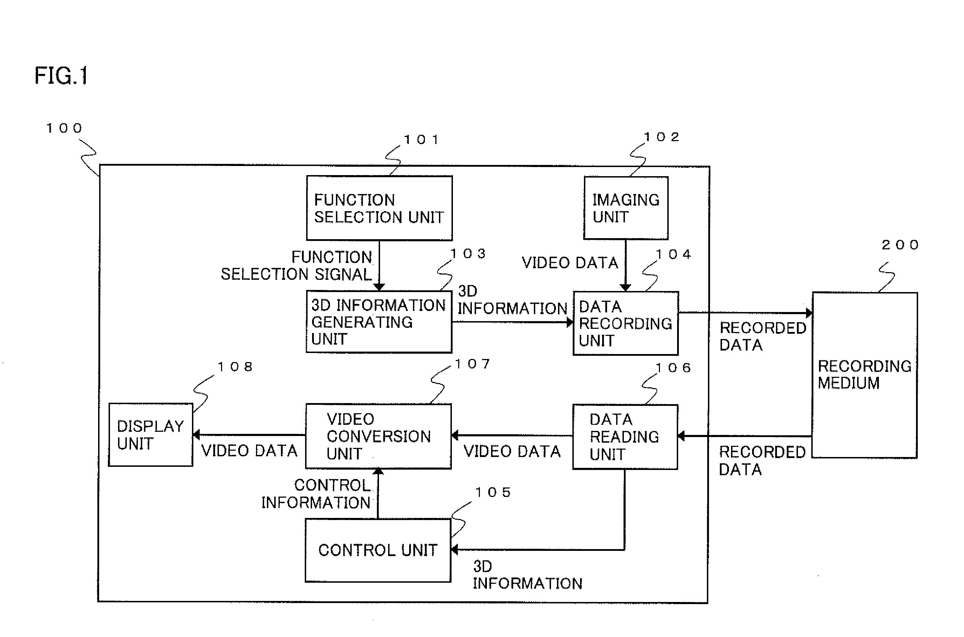

Fig. 1 is a block diagram showing a configuration of a video recording apparatus 100 according to a first embodiment of the present invention.

Referring to Fig. 1, video recording apparatus 100 records in a recording medium 200 a video taken from a subject, and reproduces a video recorded in recording medium 200. Thus, video recording apparatus 100 also functions as a video reproducing apparatus.

Video recording apparatus 100 includes: a function selection unit 101 for selectively switching the picture-taking function between monocular picture-taking and stereo picture-taking; an imaging unit 102 having an imaging element such as a Charge Coupled Device (CCD) and an autofocusing circuit; a 3D information generating unit 103 generating three-dimension information (hereinafter referred to as "3D information") of a predetermined format; and a data recording unit 104 recording in recording medium 200 video data and 3D information after they have been formatted. Video recording apparatus 100 further includes: a data reading unit 106 reading recorded data from recording medium 200; a video conversion unit 107 converting video data into a display format; a control unit 105 controlling video conversion unit 107 based on 3D information; and a display unit 108 having a three-dimensional display device using the parallax barrier method, for example.

Operations of video recording apparatus 100 thus configured will now be described.

Operations during picture-taking will be described first. It should be noted that, in the present embodiment, description will be made in connection with the use of a stereo adaptor of the type where pictures are taken by reducing each of a left eye video and a right eye video to a half in the horizontal direction on a screen divided into two as shown in Fig. 20B, although the present invention is not limited thereto and other types of stereo adaptor or a binocular camera may also be used.

Before beginning picture-taking, a photographer operates function selection unit 101 to select a picture-taking operation. The normal picture-taking operation is selected when a two-dimensional video is to be taken while, to take a three-dimensional video, a stereo adaptor is mounted on imaging unit 102 and the stereo picture-taking operation is selected. Function selection unit 101 informs 3D information generating unit 103 of the selected picture-taking operation by a function selection signal.

When the photographer has begun picture-taking, one frame of video is captured by imaging unit 102 at a predetermined period and the video data is provided to data recording unit 104. During the normal picture-taking, data recording unit 104 records in recording medium 200 the video data provided by imaging unit 102 in a predetermined format. Although not shown in Fig. 1, data of voice or music to be recorded, if any, is also multiplexed by data recording unit 104.

Display unit 108 reads and displays the video data provided to data recording unit 104 by imaging unit 102. The photographer can take pictures while checking video displayed on display unit 108 for what is being recorded.

During the stereo picture-taking, 3D information generating unit 103 generates 3D information used for three-dimensional displaying from parameters regarding properties of the stereo adaptor, such as angle of view. Such parameters are stereo adaptor-specific and thus may be preset by the photographer, for example, and stored in 3D information generating unit 103.

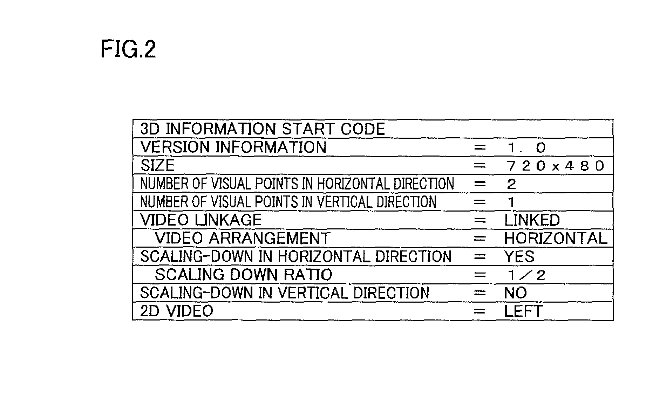

Fig. 2 shows one example of such 3D information.

In Fig. 2, the left portion with respect to " = " shows item names of the 3D information, while the right portion shows values being set. The 3D information shown in Fig. 2 shows the data format of the video in Fig. 20B: the number of visual points in the horizontal direction is "2" and the number of visual points in the vertical direction is "1", indicating that there are two visual points of video, right and left; the video arrangement is "horizontal", indicating that two videos, right and left, are linked in the horizontal direction. The scaling-down in the horizontal direction has "yes", indicating that the video is scaled down in the horizontal direction because the angle of view remains the same; and Scaling down ratio, which follows, indicates that the video is scaled down by 1/2. Since it is not scaled down in the vertical direction, its scaling down ratio is not designated. 2D Video indicates the visual point selected for two-dimensional display and, in this example, the left eye video is designated. The 3D information start data is data of a fixed value indicating start of 3D information, while the version information indicates compatibility of 3D information. 3D information thus generated is provided to data recording unit 104 as part of information attached to video data.

Data recording unit 104 records, in recording medium 200, 3D information provided from 3D information generating unit 103 and video data provided from imaging unit 102 in accordance with a predetermined format. The recording medium for recording data to be recorded may usually be an IC memory or magneto-optic disk, magnetic tape, hard disk or the like, and description will be made here in connection with the use of a magnetic tape.

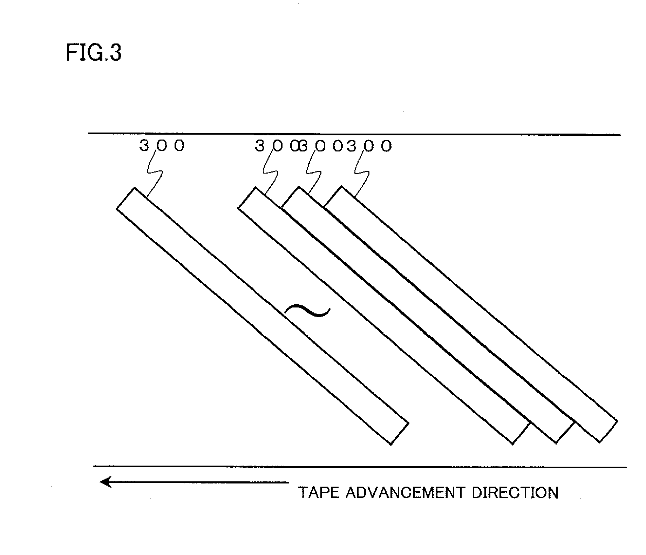

Generally, recording on a magnetic tape is predominantly performed by a technique called helical scanning. This technique records data to tracks 300 that are arranged discontinuously on a magnetic tape, as shown in Fig. 3.

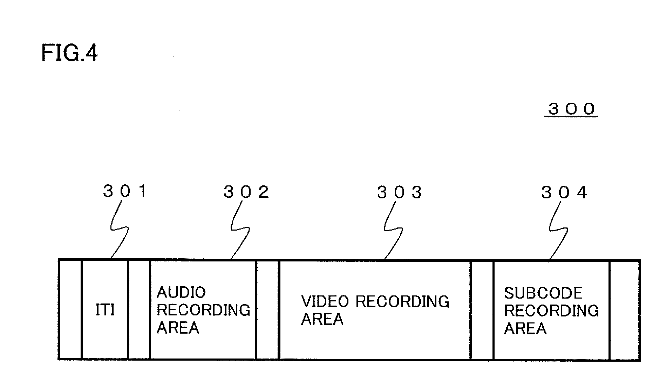

Fig. 4 shows one enlarged track 300, showing one example of track format.

In Fig. 4, a track 300 includes an Insert and Track Information (ITI) area 301 for ensuring after-recording, an audio recording area 302 in which data of audio is recorded, a video recording area 303 in which data of video is recorded, and a subcode recording area 304 in which attached information such as track number or time code is recorded.

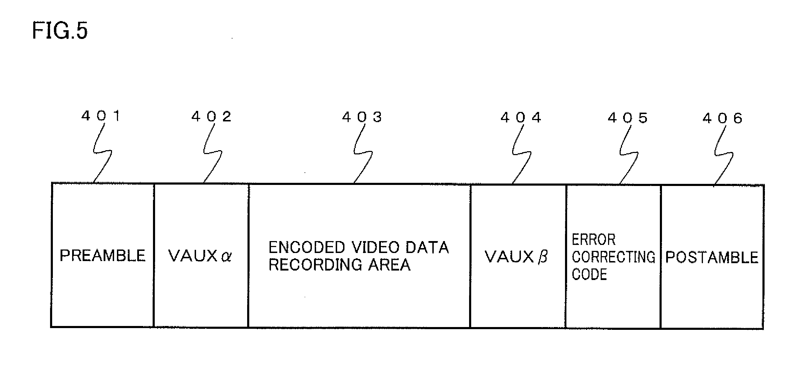

Fig. 5 is video recording area 303 shown in Fig. 4 being enlarged.

Video recording area 303 includes a preamble 401 in which synchronization pattern or the like is recorded, areas Video AUXiliary data (VAUX) α402 and VAUXβ404 in which attached information regarding video is recorded, a encoded video data recording area 403 in which encoded video data is recorded, an error correcting code 405, and a postamble 406 that serves to allow a margin.

In the present embodiment, the area for recording attached information regarding video is divided into two: area VAUXα402 and area VAUXβ404, which will together be called the VAUX area. Although not shown, an Audio AUXiliary data (AAUX) area is provided for recording attached information regarding audio in audio recording area 302. 3D information is recorded in one of the VAUX area, AAUX area and subcode area. In the present embodiment, description will be made in connection with recording in the VAUX area.

Data recording unit 104 divides input video data among a plurality of tracks and records them. After the video data has been encoded in a predetermined method, it is disposed in encoded video data recording area 403. The 3D information is converted to a sequence of bits by fixed-length encoding or variable-length encoding and disposed in the VAUX area together with other attached information. The data amount of the 3D information is small enough in comparison with the size of the VAUX area that it may be recorded on each of the tracks that record data of one frame of video, where it may always be disposed in VAUXα402, or may be alternatingly disposed in VAUXα402 and VAUXβ404 by the track. If it cannot be accommodated in a VAUX area together with other attached information, it may be divided among a plurality of tracks to be recorded.

Preamble 401, error correcting code 405 and postamble 406 are added thereto to provide one track's video recording area data, and analogously provided audio recording area data and subcode recording area data are combined with it into the format shown in Fig. 4, and ITI information 301 and margins between the areas are then added before the resulting recorded data is output.

It should be noted that the 3D information may be divided among a VAUX area, AAUX area and subcode area to be recorded. Further, some digital VTRs incorporate a cassette memory for recording attached information, where the above 3D information may be recorded in the cassette memory.

Now, reproduction function where video recorded in recording medium 200 is reproduced will be described.

In Fig. 1, data reading unit 106 reads recorded data from track 300 on a magnetic tape and, in the order in which it is read from track 300, divides it into audio data, video data and subcode and performs error correction for each of them. For video data, encoded video data read from encoded video data recording area 403 is decoded in a predetermined method, and provides the decoded video data to video conversion unit 107. The reading unit also searches attached information read from the VAUX area for a 3D information start marker and extracts the 3D information to provide it to control unit 105.

Control unit 105 references version information in the 3D information provided from data reading unit 106 and determines whether or not the following items can be interpreted. If these items of the 3D information can be interpreted, it decides control information in the interpreted 3D information and provides it to video conversion unit 107. If there is no 3D information, it provides to video conversion unit 107 control information for two-dimensional display.

It can be seen that if, for example, the 3D information is configured as shown in Fig. 2, the video data is in such a format that right and left videos are linked horizontally and scaled down by 1/2 in the horizontal direction, as shown in Fig. 20B. Consequently, control unit 105 provides control information to video conversion unit 107 to rearrange the video in the horizontal direction on a pixel-to-pixel basis and convert it to a format suitable for display unit 108.

It should be noted that switching may be made between two-dimensional display and three-dimensional display by hand as necessary when a three-dimensional video is to be displayed. When switching is made to two-dimensional display, control information is provided to video conversion unit 107 to cause a video of the visual point specified in the 2D video in the 3D information to be displayed. If there is no 3D information, control information is provided to video conversion unit 107 to output video data as it is provided by data reading unit 106.

In this way, when a video is recorded, 3D information is recorded in a recording area for attached information of video data distinguishably from other attached information, allowing the reproducing device to convert it into a display format suitable for the display device while maintaining compatibility with existing devices, thereby facilitating an increase in usability of a recorded video.

It should be noted that, in the above embodiment, description was made in connection with the use of a magnetic tape as the recording medium, although other recording media such as an IC memory, magneto-optical disk, hard disk or the like on which a file system is constructed may be used to record video data as a file. In this case, 3D information may be recorded in a file header of a video file, or may be recorded in a file other than that for video data.

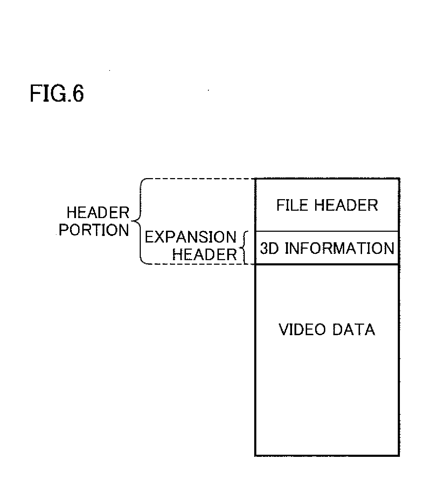

Fig. 6 shows an exemplary file format for recording 3D information in a file header of a video file. In Fig. 6, data is recorded in a file from up to down in the figure. As shown in Fig. 6, 3D information may be recorded as part of the existing header portion using a scheme in which a header portion provided in a conventional file format is expanded. The portion of the header provided by the expansion will be herein referred to as an expansion header. For example, when employing Moving Picture Experts Group -4 (MPEG-4), which is an international standard for video coding method, the file header corresponds to Visual Object Sequence or/and Video Object Layer, in which 3D information is recorded as user data.

To record one frame of video as a stationary image, Joint Photographic Experts Group (JPEG), for example, which is an international standard for still image coding method may be employed, where the file header corresponds to application data segment, and a new application data segment is defined for recording 3D information. In this way, recorded video may gain usability while retaining compatibility with existing file formats.

In the above embodiment, the data format in which video data is recorded in recording medium 200 during stereo picture-taking matches that of the video taken, although the photographer may select a desired data format using function selection unit 101. In this case, parameters regarding the data format of video data are sent to 3D information generating unit 103, and 3D information generating unit 103 generates 3D information based on the input parameters. Data recording unit 104 modifies the format of the video data provided by imaging unit 102 based on the 3D information provided by 3D information generating unit 103.

Further, in the above embodiment, display unit 108 reads video data taken by imaging unit 102 from data recording unit 104 and displays it when the photographer has selected image recording function, where this video has a left eye video and a right eye video on a screen divided into two, each scaled down by 1/2 in the horizontal direction as shown in Fig. 20B during stereo picture-taking. Here, recorded data output by data recording unit 104 may be directly input to data reading unit 106 to reproduce the recorded data. Or, recorded data recorded in recording medium 200 by data recording unit 104 may be immediately read for reproduction. In this way, three-dimensional video during stereo picture-taking may be displayed similar to being reproduced from a recording medium, allowing it to be checked.

Moreover, the present invention may also be applied to a video transmitting apparatus for transmitting recorded data to a communication channel.

### [Second Embodiment]

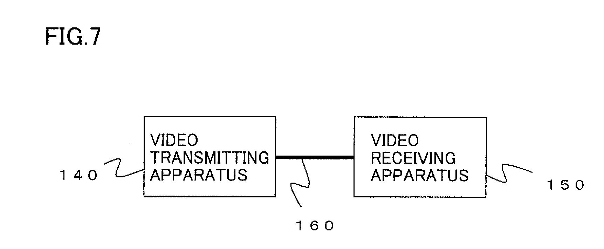

Fig. 7 shows a video reproduction system where a video transmitting apparatus 140 that transmits video data is connected with a video receiving apparatus 150 that receives the video data via a transmission channel 160 through which video data as well as commands for controlling connected apparatuses are exchanged.

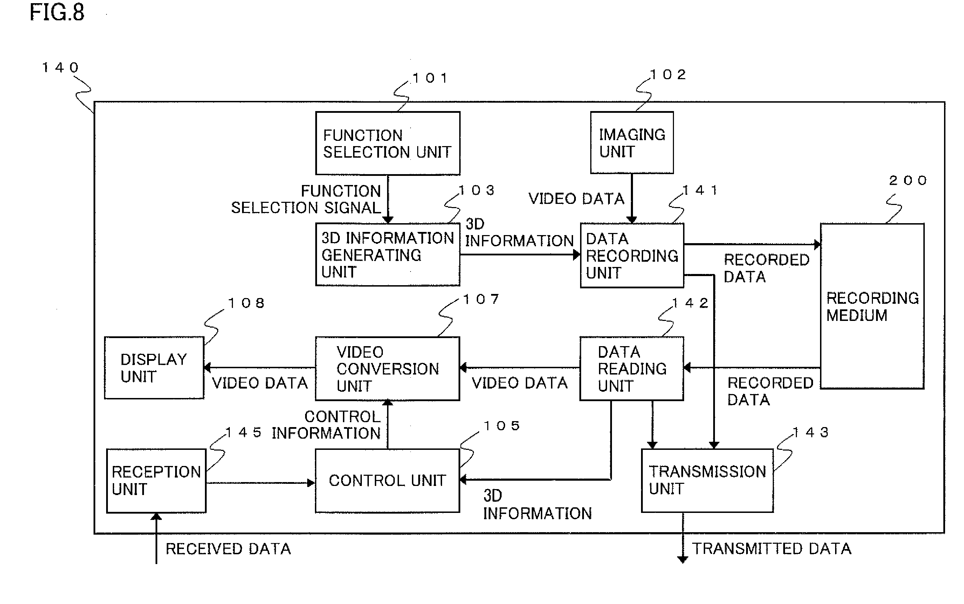

Fig. 8 is a block diagram showing an exemplary configuration of video transmitting apparatus 140.

In Fig. 8, like components as in Fig. 1 are designated by like characters and thus will not be described again. Video transmitting apparatus 140 includes a function selection unit 101, an imaging unit 102, a 3D information generating unit 103, a data recording unit 141, a control unit 105, a data reading unit 142, a video conversion unit 107, a display unit 108, a transmission unit 143, a reception unit 145 and a recording medium 200.

Operations of video transmitting apparatus 140 configured above will now be described. However, the operations since picture-taking begins until data to be recorded is recorded in recording medium 200 are the same as in the above first embodiment and thus will not be described again.

Data recording unit 141 records, in recording medium 200, multiplexed data into which video data and 3D information are multiplexed in accordance with a predetermined recording format, and provides the multiplexed data to transmission unit 143. Alternatively, data reading unit 142 reads multiplexed data recorded in recording medium 200 and provides it to transmission unit 143.

Transmission unit 143 stores data provided by data recording unit 141 or data reading unit 142 in a packet of a format prescribed in a predetermined protocol and sends it to transmission channel 160.

Transmission channel 160 may be a serial bus, for example, in accordance with the Institute of Electrical and Electronic Engineers 1394 (IEEE1394) standard or Universal Serial Bus (USB) standard. In the present embodiment, description will be made in connection with the use of a serial bus in accordance with the IEEE1394 standard.

The IEEE1394 standard provides two communication modes for data transmission: asynchronous communication mode and isochronous communication mode. For real-time transmission of video data, the isochronous communication mode is employed where secured bands can be previously ensured.

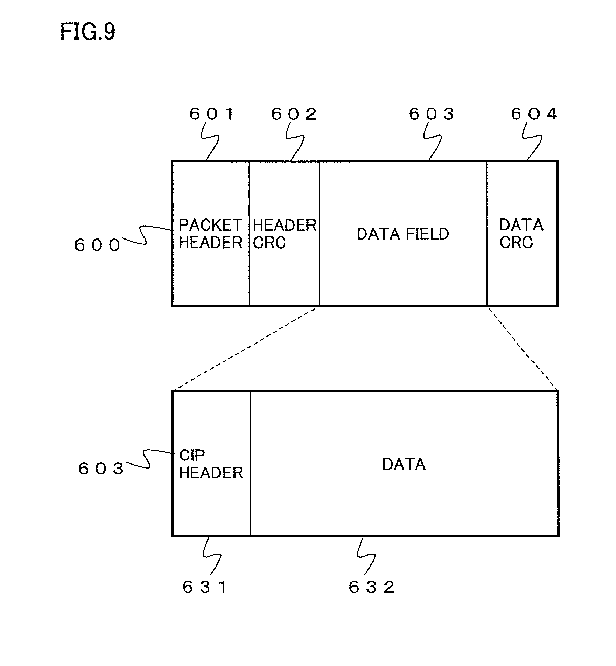

Fig. 9 shows a packet format in the isochronous communication mode in accordance with the IEEE1394 standard.

As shown in Fig. 9, a packet 600 includes a packet header 601, a header CRC 602 which is a Cyclic Redundancy Check (CRC) for packet header 601, a data field 603 which is an area for storing data being transmitted, and a data CRC 604 which is a CRC for the data field.

Further, the data field is composed of data 632, which is data being transmitted, and a Common Isochronous Packet (CIP) header 631 indicating the attribute of this data 632. CIP header 631 may record size of data 632 or time information for synchronization, for example.

The recording mode may be the Digital Video (DV) format, where track data as shown in Fig. 4 together with a track synchronization signal is provided from data recording unit 141 or data reading unit 142 to transmission unit 143. Transmission unit 143 divides the input track data into data blocks of 80 bytes (3 bytes are used for ID).

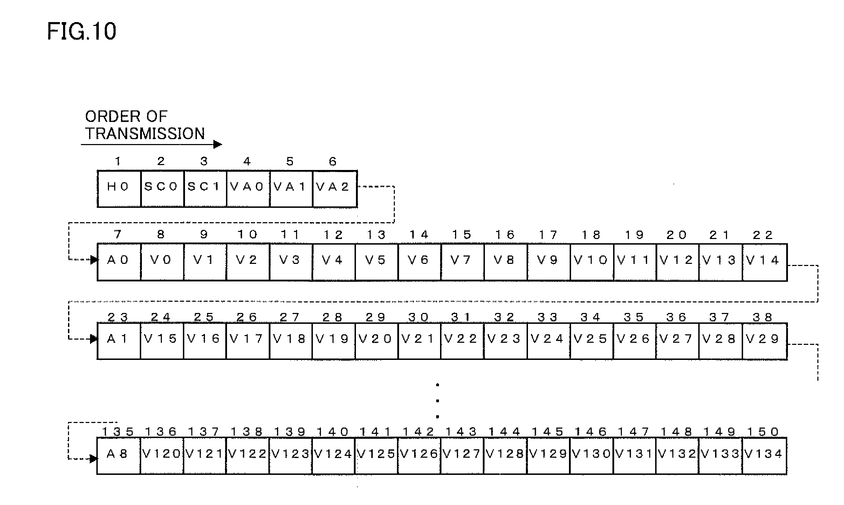

Fig. 10 shows an order in which individual data blocks are transmitted.

In Fig. 10, block H0 is a block storing recorded data such as ITI301 in Fig. 4; blocks SCi (i = 0, 1) indicate recorded data of subcode recording area 304 in Fig. 4; blocks VAj (j = 0, 1, 2) indicate recorded data of areas VAUXα402 and VAUXβ404 in Fig. 5; blocks Vk (k is an integral from 0 to 134) indicate recorded data of encoded video area 403 in Fig. 5; and blocks Am (m is an integral from 0 to 8) indicate data blocks into which recorded data of audio recording area 302 in Fig. 4 has been divided. The numbers above the data blocks indicate the order of transmission.

Transmission unit 143 stores six data blocks in one packet according to the order of transmission shown in Fig. 10 and sends them to communication channel 160. Accordingly, 25 packets are transmitted per track. When 3D information is stored in a VAUX area as described above, the 3D information will be transmitted in the first packet of each track.

It should be noted that information indicating whether a transmitted packet contains 3D information may be attached to the packet header to be transmitted. For example, in the above isochronous communication mode, information indicating whether 3D information is contained may be recorded in the expansion area of CIP header 631 shown in Fig. 9.

Next, video receiving apparatus 150 will be described.

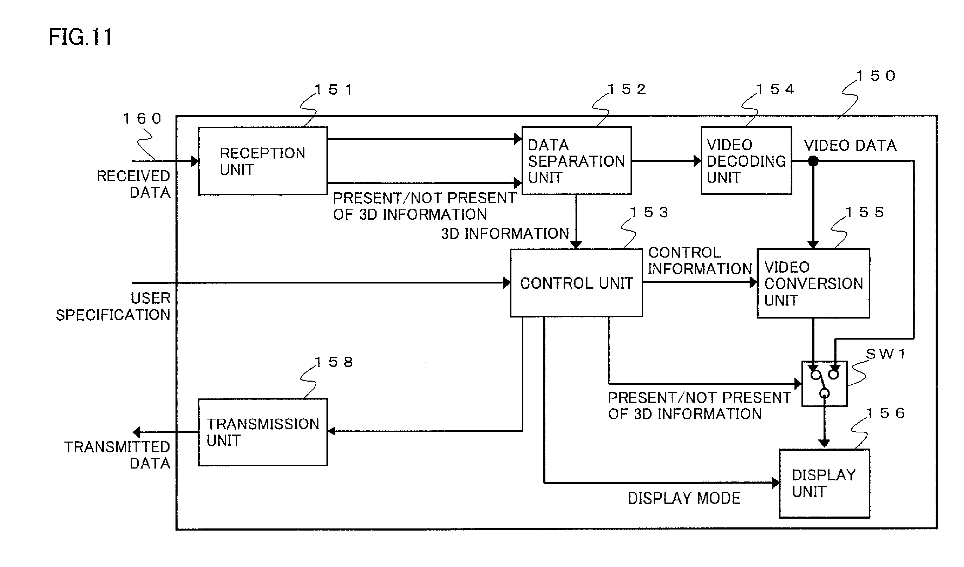

Fig. 11 is a block diagram showing an exemplary configuration of video receiving apparatus 150.

As shown in Fig. 11, video receiving apparatus 150 includes a reception unit 151 receiving data via communication channel 160, a data separation unit 152 for separating multiplexed data, a control unit 153 outputting a present/not present of 3D information in received data as well as control information, a video decoding unit 154 decoding encoded video data, a video conversion unit 155 converting the data format of video data, a display unit 156 capable of being switched between two display modes i.e. three-dimensional display and two-dimensional display, and a transmission unit 158.

General operations of video receiving apparatus 150 configured above will now be described.

Reception unit 151 receives data to be received in packet from communication channel 160 and extracts data 632 shown in Fig. 9 by removing the packet header and the like and provides it to data separation unit 152. It also reads, from the header portion of the packet, information as to whether 3D information is included in the packet and outputs it as a present/not present of 3D information (which takes one of the values "present", "not present" and "not determined") to data separation unit 152.

Data separation unit 152 extracts video data from the multiplexed data provided from reception unit 151 and provides it to video decoding unit 154. If the present/not present of 3D information indicates "present", 3D information is extracted from the multiplexed data and is provided to control unit 153.

If the present/not present of 3D information indicates "not determined", the multiplexed data provided from reception unit 151 is searched for a 3D information start code and determination is made as to whether 3D information is included in the multiplexed data. If 3D information is present, data of a predetermined number of bytes later than the 3D information start code is extracted as 3D information.

If, for example, DV data is transmitted in packet by video transmitting apparatus 140 as described above, reception unit 151 receives data for one track and reconstruct the track data shown in Fig. 4 and provides it to data separation unit 157.

Further, from time information of CIP header 631 above, a synchronization signal (not shown) is recovered. The synchronization signal allows received video data to be synchronized in being displayed.

Data separation unit 152 extracts audio data, video data and subcode from the track data provided by data reception unit 151. Further, it separates the extracted video data into encoded video data stored in encoded video data recording area 403 and attached information stored in the VAUX area as shown in Fig. 5, and provides the encoded video data to video decoding unit 154. It further extracts 3D information from the attached information to provide it to control unit 153.

Video decoding unit 154 decodes, in a predetermined method, video data from data separation unit 152 if it is encoded. Otherwise, it provides input video data to video conversion unit 155 as it is.

Control unit 153 references version information in the 3D information and determines a version as interpretable that is earlier than the version number of interpretable 3D information. If items of the 3D information can be interpreted, control information is provided to video conversion unit 155 for controlling video conversion unit 155 based on the interpreted 3D information. If 3D information is not extracted, information is provided to video conversion unit 155 indicating that no 3D information is present.

The process may be interrupted if 3D information cannot be interpreted due to version differences and, since at least it is known that it is about three-dimensional video, default control information may be provided to video conversion unit 155.

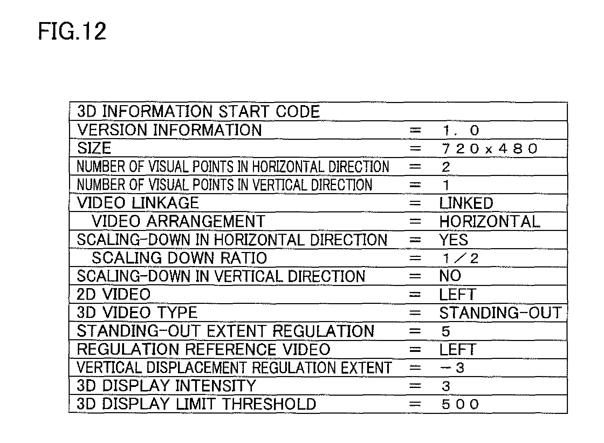

It is possible to know the format of input video data from 3D information. If, for example, the contents of 3D information are as shown in Fig. 12, the parameters "number of visual points in horizontal direction", "number of visual points in vertical direction", "video linkage", "video arrangement", "scaling-down in horizontal direction", "scaling-down in vertical direction" and "scaling down ratio" allow determining that the video data is in such a format that right and left videos scaled down by 1/2 in the horizontal direction are linked together in the horizontal direction as shown in Fig. 20B.

Further, control unit 153 decides the present/not present of 3D information (which takes one of the values "present" and "not present" here), as well as the display mode for display unit 156. If 3D information is present, the present/not present of 3D information indicates "present" and the display mode is "3D", while if 3D information is not present, the present/not present of 3D information indicates "not present" and the display mode is "2D". However, if a display mode is specified by the user, the display mode specified by the user is output irrespective of the value of the present/not present of 3D information. Control unit 153 provides the present/not present of 3D information to switch SW1 and the display mode to display unit 156.

If the present/not present of 3D information indicates "present", switch SW1 switches to allow the output of image conversion unit 155 to be provided to display unit 156, while if the present/not present of 3D information indicates "not present", it switches to allow the output of video decoding unit 154 to be provided to display unit 156.

Video conversion unit 155 converts video data from video decoding unit 154 to a format that allows it to be displayed at display unit 156 based on control information provided from control unit 153.

Description will now be made of an example of three-dimensional display at display unit 156. To display three-dimensional video on the entire screen of display unit 156, control unit 153 provides control information to video conversion unit 155 to rearrange pixels of input video data on a pixel-to-pixel basis in the horizontal direction to convert it to a format suitable for display unit 156. The viewer/listener can view the video displayed on display unit 156 as three-dimensional video.

If the resolution of input video data does not match with that of display unit 156, the video data may undergo resolution conversion to allow it to be displayed on the entire screen, or it may be displayed in the middle of the screen of display unit 156 at the same resolution.

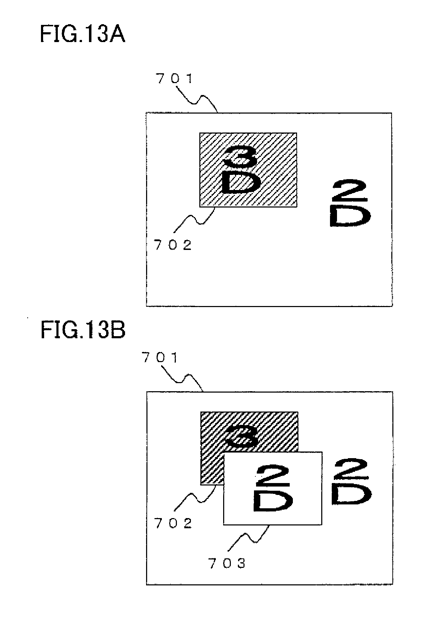

If three-dimensional video is displayed within a display window 702 in a portion of screen 701 as shown in Fig. 13A, control unit 153 provides control information to video conversion unit 155 to perform conversion for three-dimensional video to be displayed in window 702 in a similar manner to the above entire screen displaying, and in the two-dimensional display portion outside window 702 superimpose two images of a single visual point so as to allow one and the same image to be viewed to the left and right eyes.

Further, if a two-dimensional display window 703 is to be displayed on a three-dimensional display window 702 as shown in Fig. 13B, two-dimensional display may be performed across the entire screen.

It should be noted that the item "2D video" in Fig. 12 indicates the visual point of video that is to be displayed when three-dimensional video is displayed two-dimensionally. For example, in the case of Fig. 12, a left eye video, as specified in "2D video", is displayed when the display mode specified by the user is "2D". In the case of Fig. 20B, a left eye video is enlarged twofold in the horizontal direction. However, which visual point of video is to be used for two-dimensional display is not limited thereto, and video of a predetermined visual point may be displayed at video receiving apparatus 150, or it may be selected by the user. It also applies to a case where "2D video" has the value of not determined.

"Stand-out extent regulation" in Fig. 12 indicates the extent to which three-dimensional video appears to stand out from the display plane of display unit 156.

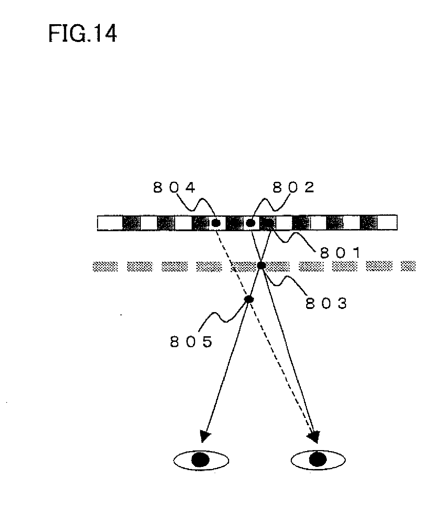

The stand-out extent will be explained referring to Fig. 14. In Fig. 14, a pixel L1 of left eye video is displayed at display position 801 while a corresponding pixel R1 of right eye video is displayed at display position 802. These pixels are focused onto position 803.

Now, the display position of pixel R1 of right eye video may be moved to the left, from 802 to 804, such that the video focused onto position 803 appears to be at position 805. Position 805 is up front relative to position 803 and thus appears to stand out from the display plane. Conversely, pixel R1 may be moved from 802 to the right such that the video focused onto position 803 appears to be behind the display plane. Pixel R1 is called herein a corresponding point of pixel L1.

To achieve a stand-out extent specified by "stand-out extent regulation", control unit 153 provides control information to video conversion unit 155 to shift either a left or right video by a predetermined number of pixels in the horizontal direction.

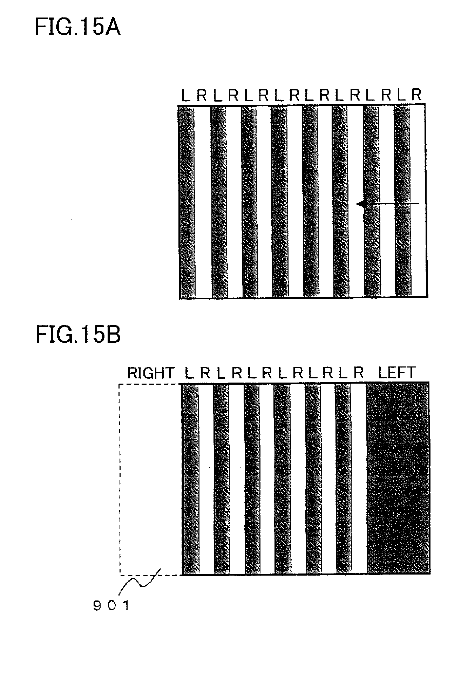

Figs. 15A and 15B show how a right eye video can be shifted to the left.

Fig. 15A shows a video before shift, where the entire display screen is displayed three-dimensionally. Fig. 15B shows a video after shift, where the right eye video has been shifted resulting in an area 901 of the right eye video indicated by the dotted line being outside the display screen, such that not the entire video can be displayed.

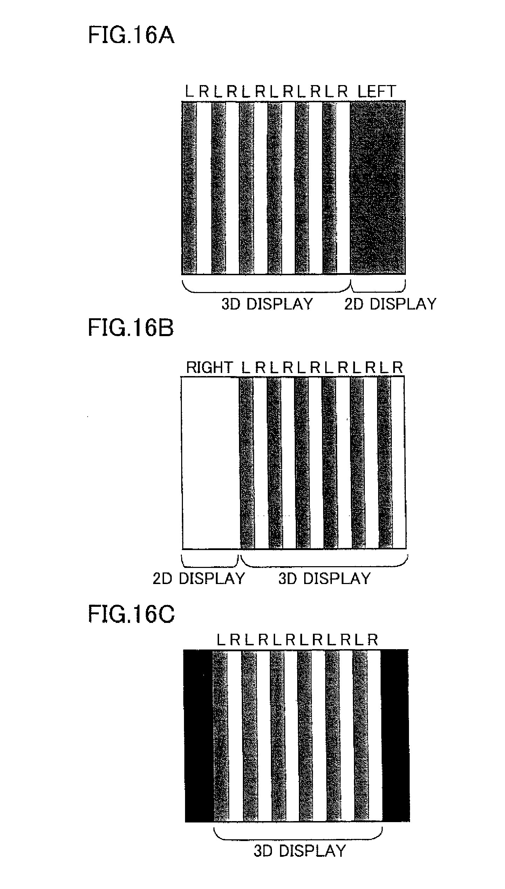

Figs. 16A to 16C show an example of such display. In Fig. 16A, the shifted-out portion of the right eye video is not displayed while the portion of the left eye video that does not have a corresponding point due to the shifting of the right eye video is displayed two-dimensionally. In Fig. 16B, the right eye video remains while a portion of the left eye video is not displayed, and the portion of the right eye video that does not have a corresponding point is displayed two-dimensionally, analogous to Fig. 16A. In Fig. 16C, the portion having corresponding points is displayed three-dimensionally and the rest is not displayed.

The item "regulation reference video" in Fig. 12 indicates the video that remains as two-dimensional display after a regulation of standing-out extent, producing a video as shown in Fig. 16A when the left eye video is specified as "regulation reference video" while producing a video as shown in Fig. 16B when the right eye video is specified as "regulation reference video".

It should be noted that "standing-out extent regulation" and "regulation reference video" may be predetermined at video receiving apparatus 150, or they may be modified as specified by the user. When they are modified as specified by the user, the shifted video and the regulation reference video that are selected may be identical or may be different.

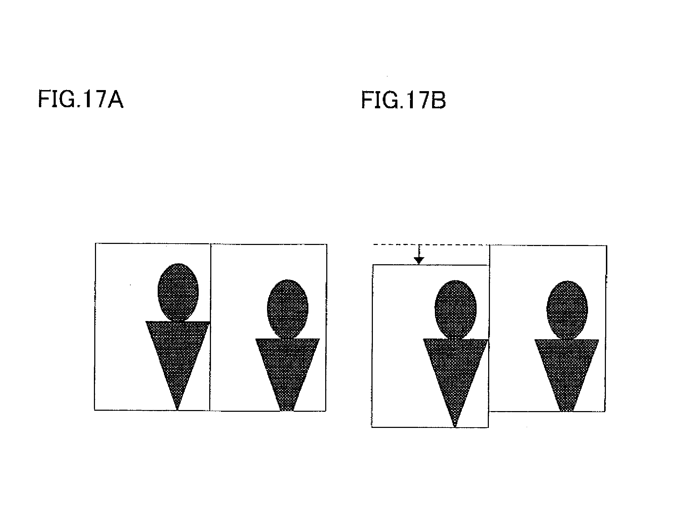

The item "vertical displacement regulation extent" in Fig. 12 indicates the extent to which the right and left videos are regulated in the vertical direction. If there is a vertical displacement between the right and left videos from picture-taking as shown in Fig. 17A, the item is employed to correct for the displacement, as in Fig. 17B. In the example of Fig. 12, the direction of shift is represented by the symbols of plus and minus; ―3 indicates a downward shift by three pixels. Although in this example the direction of shift is represented by the symbols of plus and minus, it may be independently specified as "vertical displacement direction", separate from the number of pixels for shifting. Which video is to be shifted is decided based on the above "regulation reference video".

The items "3D display intensity" and "3D display limit threshold" in Fig. 12 are used for viewing/listening restriction regarding 3D video: continued viewing/listening of 3D video may adversely affect health. If the accumulated intensity from "3D display intensity" added at a predetermined period during display of three-dimensional video exceeds a predetermined viewing/listening limit threshold, control unit 153 outputs control information to switch the display mode from "3D" to "2D" and cause image conversion unit 155 to convert three-dimensional video to two-dimensional video. Display unit 156 is forced to switch to two-dimensional display. In this case, switching between two- and three-dimensional displays is allowed after the lapse of a predetermined period of time, during which switching to three-dimensional display by the user is prohibited. It should be noted that the value of "3D display limit threshold" may be used as viewing/listening limit threshold, or this value may be adjusted by video receiving apparatus 150 to be used.

### [Third Embodiment]

Description will now be made of creation of a list of video contents recorded in a recording medium 200 mounted on video transmitting apparatus 140 by video receiving apparatus 150 shown in Fig. 11, and of its presentation to the user.

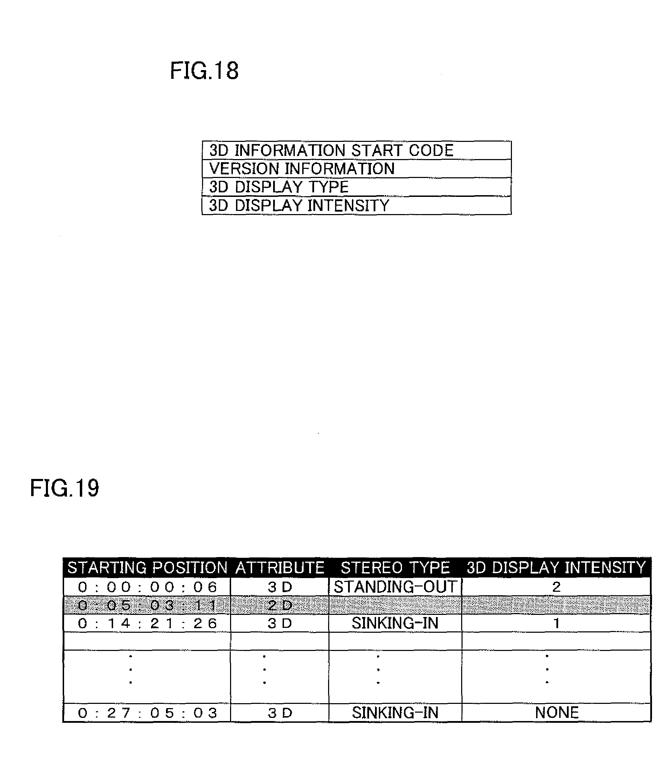

As an example, the DV format may be used for recording, as above. Further, before video data is recorded in recording medium 200, elements of 3D information that will be required for high-speed searching are recorded in subcode area 304 of Fig. 4 as shown in Fig. 18 and, for a high-speed searching of the recording medium, video transmitting apparatus 140 only transmits subcodes out of data read from recording medium 200 in packet to transmission channel 160.

Video receiving apparatus 150 receives packets from transmission channel 160 and treats the first time code received as the starting position of the first video content. If a packet contains 3D information, the attribute is 3D, otherwise it is 2D. The starting position of the next video content is the time point at which there is a change in the present/not present of 3D information, that is, when 3D information-present changes to -not present when the above attribute is 3D, or when 3D information-not present changes to -present when the above attribute is 2D; the same procedure is conducted whenever there is a change in the present/not present of 3D information.

For 3D video contents, control unit 153 reads "3D video type" and "3D display intensity" and presents classification information of the video contents in a list as shown in Fig. 19 to the user. "3D video type" and "3D display intensity" displayed in the list to be presented may be the most frequent values in statistics taken by control unit 153 from the beginning to the end of the video contents, although the displayed values are not limited thereto and may be maximum, minimum, median or average value.

Video receiving apparatus 150 uses transmission unit 158 to transmit, to video transmitting apparatus 140, commands requesting transmission of video contents selected by the user. Video transmitting apparatus 140 uses reception unit 145 to receive the commands and reproduces the video contents and initiate transmission of the video contents.

Video receiving apparatus 150 may be provided with a recording medium such as a hard disk or memory and received data may be recorded as a file, where the header portion records received 3D information as described above, and "stereo image type" and "3D display intensity" in the 3D information may record values displayed in the list.

Although in the above embodiments the recording medium was a magnetic tape, recording media such as an IC memory, magneto-optical disk, hard disk on which a file system is constructed may be used, where list information may be recorded as a file separate from video data.

Further, the present invention may also be applied to a video reproducing apparatus that reads video data from a recording medium.

It should be recognized that the disclosed embodiments above are, in all respects, by way of illustration only and not by way of limitation. The scope of the present invention is set forth by the claims rather than the above description and is intended to cover all the modifications within a spirit and scope equivalent to those of the claims.

As described above, the present invention has the advantage of facilitating viewing/listening of three-dimensional video with increased usability by a video receiving apparatus including a reception unit receiving, from a communication channel, video data in a predetermined format and attached information for the video data, or a video reproducing apparatus including a reading unit reading video data and attached information for the video data recorded in a recording medium, the apparatus including a detection unit detecting, in the attached information, added information for three-dimensionally displaying the video data, where the video data is displayed three-dimensionally when the added information is detected by the detection unit.

Or, preferably, the present invention has the advantage of facilitating viewing/listening of three-dimensional video with increased usability by creating classification information by which the video data is classified into three-dimensional video with the added information and remaining two-dimensional video depending on whether or not the added information is present.

Or, preferably, the present invention has the advantage of facilitating viewing/listening of three-dimensional video with increased usability by reproducing video data selected based on the classification information.

Or, preferably, the present invention has the advantage of facilitating viewing/listening of three-dimensional video with increased usability by including a recording unit recording, in the recording medium, video data selected based on the classification information.

Or, preferably, the present invention has the advantage of facilitating viewing/listening of three-dimensional video with increased usability by including a recording unit recording the classification information in a recording medium.

## Claims

1. A video receiving apparatus (150) **characterized in that** it comprises:
a reception unit (151) receiving, from a communication channel, video data in a predetermined format and attached information for said video data;
a detection unit (152, 153) detecting, in said attached information, added information indicating at least said predetermined format, the information used for three-dimensionally displaying said video data; and
a signal generating unit (155) generating a signal for three-dimensionally displaying said video data in accordance with said predetermined format when said added information is detected by said detection unit.

2. The video receiving apparatus according to claim 1, **characterized in that** it creates classification information by which said video data is classified into three-dimensional video with said added information and remaining two-dimensional video depending on whether or not said added information is present.

3. The video receiving apparatus according to claim 2, **characterized in that** it reproduces video data selected based on said classification information.

4. The video receiving apparatus according to claim 2, **characterized in that** it comprises a recording unit recording, in a recording medium, video data selected based on said classification information.

5. The video receiving apparatus according to claim 2, **characterized in that** it comprises a recording unit recording said classification information in a recording medium.

6. A video reproducing apparatus (100) **characterized in that** it comprises:
a reading unit (106) reading video data and attached information for said video data recorded in a recording medium;
a detection unit (105) detecting, in said attached information, added information indicating at least said predetermined format, the information used for displaying said video data as three-dimensional video; and
a signal generating unit (107) generating a signal for three-dimensionally displaying said video data in accordance with said predetermined format when said added information is detected by said detection unit.

7. The video reproducing apparatus according to claim 6, **characterized in that** it creates classification information by which said video data is classified into three-dimensional video with said added information and remaining two-dimensional video depending on whether or not said added information is present.

8. The video reproducing apparatus according to claim 7, **characterized in that** it reproduces video data selected based on said classification information.

9. The video reproducing apparatus according to claim 7, **characterized in that** it comprises a recording unit recording, in said recording medium, video data selected based on said classification information.

10. The video reproducing apparatus according to claim 7, **characterized in that** it comprises a recording unit recording, in a recording medium, the classification information for said three-dimensional video and said two-dimensional video.
